# EUROPEAN PATENT SPECIFICATION

(11) **EP 0 591 749 B1**
(45) Date of publication and mention of the grant of the patent: **18.06.1997**
(21) Application number: 93115151.8
(22) Date of filing: 21.09.1993
(51) Int. Cl.: B65G 59/08, B07C 1/02

(54) **Singler for advancing and dividing stack- grouped articles**
Vereinzelungseinrichtung zum Vorschieben und Trennen von im Stapel gruppierten Gegenständen
Dispositif séparateur pour avancer et séparer des articles groupés en forme de pile

(30) Priority: 09.10.1992 IT MI922326
(43) Date of publication of application: 13.04.1994
(73) Proprietor: ALCATEL ITALIA S.p.A., I-20158 Milano (IT)
(72) Inventor: Passero, Adolfo, I-81110 Caserta (IT)
(74) Representative: Pohl, Herbert, Dipl.-Ing.

(56) References cited:
- BE-A- 714 798
- DE-C- 565 224
- US-A- 4 435 114

## Description

The present invention relates to a singler device for advancing and dividing stack-grouped articles as described in the preamble of claim 1.

As known, in various fields, such e.g. sorting and/or making up of parcels in general, singlers are used for separating, from a stack of articles, each single article to perform on it productive or additional operations such as e.g. labelling, stampings and the like.

The prior art devices generally use vertical loaders. The stacks of articles are introduced into the latters and maintained vertically oriented by the sliding guides of the loaders. The articles are therefore overlapped each other. At the bottom of each loader suitable extraction means operate to take out the article which is in the lowest position through an opening provided in the loader itself and suitably dimensioned, i.e. so that only one article can be passed through it and hence no more than one article at a time is ejected.

The known devices outlined above however have some important shortcomings.

First of all, as the weight of each article weighs upon the underlying one, especially if such weight is not so small, in order to prevent the maximum load, which the article located in the lowest position is subject to, from being of excessive value, it is necessary to limit the number of articles overlapped vertically. Only in this manner damages to articles are avoided and eject operations are carried out by extracting means which have to drag to the outlet opening the article at the bottom, overcoming the friction due to the standing-above load which opposes its motion.

In trying to solve this problem, devices have been realized in which the last object of the stack but one, i.e. the article overlapping the one which has to be ejected, is blocked by gripping members designed to hold the weight of the stack during ejection. This expedient, however, implies a remarkable complication in the structure of the device and, anyway, the number of stacked articles also in this instance has a limitation correlated to the effectiveness of the gripping members.

The device disclosed in BE-A-714 798 is a buffer storage to receive individually flat, light and thin articles to be conveyed, particularly letters, and to turn them out individually or in an overlapping sequence. The input to the buffer stack consists of two parallel belts between which the letter is guided to the stacking point. Vertical U-shaped partitions are provided in the horizontal direction of conveyence at equal intervals, to subdivide the stacking place to absorb part of the pressure among the articles of which at least one is between the stacking facility and the removing facility and is dimensioned to by-pass said facility.

Moreover, the known devices are each designed for only one dimensional class of articles both because the extraction opening has a fixed and rigid contour, and because of the dimension of the loader itself. In practice it is therefore necessary to carry out, if required, complicated operations to adapt the device to the various dimensional classes of articles which are intended to be sorted separately. Furthermore the device known in the prior art BE-A-714 798 can only be used for thin, flat articles, but couldn't be capable of advancing and dividing articles of different shapes. Therefore the known device is not capable of advancing and dividing thick and heavy articles.

In this situation, it is the task of the present invention to conceive a singler for advancing and dividing stack-grouped articles capable of substantially overcoming the above mentioned shortcomings.

Within said task it is an important object of this invention to conceive a device which has no limitation in the number of stacked articles to be sorted seperately and permits a higher sorting capacity.

Another important object of the invention is to provide a device having very high operative flexibility, i.e. that permits advancing and dividing of articles belonging to different dimensional classes.

The aforesaid task and object are substantially achieved by a singler for advancing and dividing stack-grouped articles, including a feeding conveyor on which said stack-grouped articles are disposable side by side flanking each other, and at least one barrier for intercepting said articles, arranged above, and in a direction transverse to said feeding conveyor, and means for extracting sideways from said conveyor each single article intercepted sequentially by said barrier, characterized in that said extracting means comprises a movable element to define a passage port, and said barrier includes means for pushing single articles, and the singler further includes means designed to recieve and take away from said extracting means each single article extracted from said feeding conveyor, including a turning over guide operating on single articles extracted from the feeding conveyor.

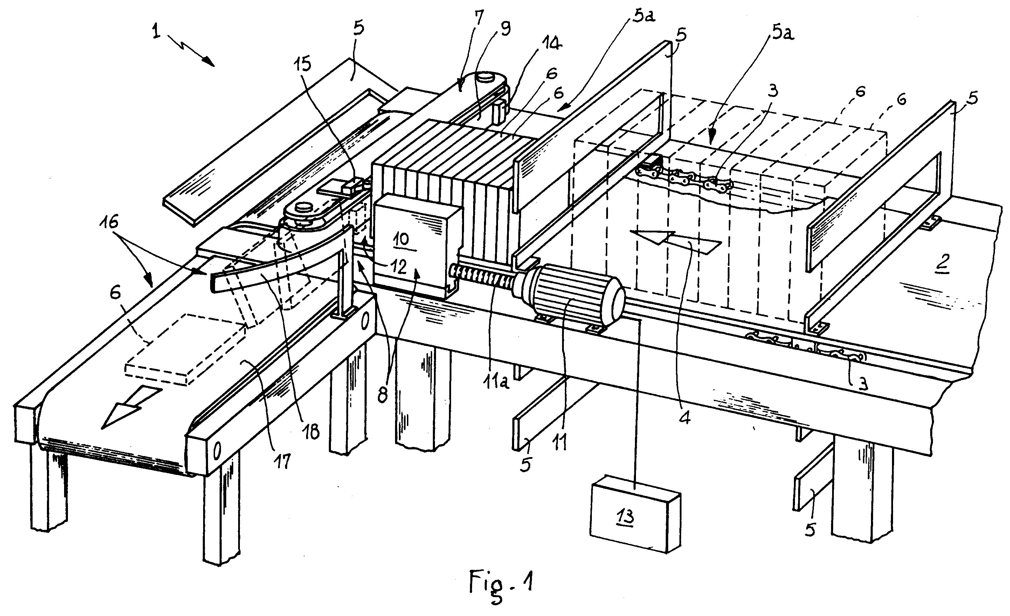

A preferred but not exclusive embodiment of a device in accordance with the invention will now be described, by way of a not limiting example, with reference to the attached drawing the sole figure of which shows, in a perspective view with portions broken away, the device according to the invention.

With reference to said figure, the device in accordance with the invention is designated as a whole by reference numeral 1.

It comprises a feeding conveyor 2, formed e.g. by a pair of chaims 3, movable in a feed direction 4.

Associated with chains 3 are contain and subdivide elements each formed e.g. by a contain tray 5a defined between two adjacent bulkheads 5 into which stack-grouped articles 6 are disposable edgeways and flanked each other. In each tray 5a only articles belonging to the same dimensional class are loaded.

Since several bulkheads 5 are engaged by chains 3, the device 1 allows the handling of articles belonging to different dimensional classes.

Extending transversally above the feeding conveyor 2 is a cantilevered barrier 7 for intercepting the articles 6 transported by the feeding conveyor 2.

Provided at the interceptive barrier 7 are means 8 for extracting sideways from the feeding conveyor 2 each article 6 intercepted sequentially by the barrier 7 itself. More precisely, the extracting means 8 comprise an endless flexible transmission element 9, e.g. a belt, engaged with barrier 7 and, in practice, defining the interceptive barrier itself, and a movable element 10 driven by an electric motor 11 through a worm screw 11a and designed to define a side passage-port 12 near the transmission element or belt 9.

The passage-port 12 can be varied according to the position of the movable element 10 and is adjustable in relation to the dimensional class of the articles contained in the tray 5a adjacent to the barrier 7.

Advantageously a control unit 13 is provided through which it is possible to program the width of the passage-port 12 in relation to the dimensional class of articles 6 contained in each tray 5a. Suitable sensors, e.g. photocells, not shown since conventional and known per se, can be used for detecting the progressive passage of bulkheads 5 at a predetermined point and, consequently, individuating the rotation of trays 5a containing the articles 6 to be sorted separately at the extracting means 8. Moreover, applied to the belt 9 is at least one ledge 14 projecting from the belt itself by an amount which is lesser than the thickness of the thinnest article 6 so as to interfere during the motion of belt 9 only with the article abutting the latter.

A sensor 15, located near the interceptive barrier 7, starts up the motion of belt 9 in the presence of an article approaching the belt itself.

Advantageously, bulkheads 5 are substantially C-shaped and extend in a direction transverse to the feeding conveyor 2 so as to not interfere with the interceptive barrier 7 during the feed motion of the conveyor itself.

Provided at side of conveyor 2 and near extracting means at last is an apparatus 16 designed to receive and take away each single article 6 taken out from a tray 5a, which is fit to arrange the single articles 6 according to a horizontal orientation with their one largest face. In this manner, articles 6 assume an optimal orientation with the object of their subsequent engagement in other workstations, such as e.g. labelling units or the like, operating downstream of the device 1 with reference to the feed motion of the articles themselves.

Such receive and take-away apparatus 16 comprises a sorting conveyor 17 and a turning over guide 18 designed to overturn each single article ejected by extracting means 8, i.e. to lay its largest face on the same sorting conveyor 17.

The operation of the above mainly structural description of a singler for advancing and dividing articles is the following.

First of all a stack of articles belonging to the same dimensional class is positioned flanked into each tray 5a. In this manner the weight of each of them weighs only upon the feeding conveyor 2. If articles disposed in the various trays 5a belong to different dimensional classes, by acting upon the control unit 13, connected with said sensors, the extracting means 8, and more precisely the width of the passage-port 12 defined by the movable element 10, is programmed so that such width does correspond to the thickness of articles 6 whose tray 5a is adjacent with the interceptive barrier 7.

As soon as sensor 15 detects the presence of an article in contact with belt 9, the latter is set in motion upon stopping of conveyor 2 and, through the ledge 14, pushes the same article abutting thereon, in a direction transverse to the feed direction 4 towards the receive and take-away apparatus 16.

The movable element 10, by forming a port corresponding to the thickness of each article, allows the ejection of the article in contact with the belt 9 only and holds back the subsequent articles which tend to be dragged transversally by friction.

Every article 6 of each stack is thus extracted sideways from conveyor 17, while the turning-over guide 18 provides for lying on the latter the extracted article with its one largest face.

The invention offers important advantages.

In particular it is emphasized that being the stacks of articles disposed horizontally, in practice there is no limitation as to the number of articles, even if heavy, in each stack, since every single article will weigh on the feeding conveyor and does not affect anyway the operation of the extracting means.

Moreover the adjusting of the extracting means 8 programmable in advance, allows a high flexibility of operation, i.e. the possibility of integrating the singler according to the present invention for easily and fastly advancing and dividing articles of different dimensional classes.

Finally it is important to point out that the particular embodiment illustrated is to advantage even in its most specific aspects.

Moreover all details are replaceable with technical eqivalent elements.

In implementing the invention, materials, shapes and dimensions can be adapted according to the needs.

## Claims

1. A singler for advancing and dividing stack-grouped articles, including:
- a feeding conveyor (2) on which said stack-grouped articles are disposable side by side flanking each other;
- at least one barrier (7) for intercepting said articles, arranged above, and in a direction transverse to, said feeding conveyor;
- means (8) for extracting sideways from said conveyor each single article intercepted sequentially by said barrier,
**characterized in that**
- said extracting means (8) comprises a movable element (10) to define a passage port (12),
- said barrier (7) includes means (14) for pushing single articles; and
- the singler further includes means (16) designed to recieve and take away from said extracting means each single article extracted from said feeding conveyor, including a turning over guide (18) operating on single articles extracted from the feeding conveyor.

2. The singler of claim 1, wherein, engaged with said feeding conveyor (2), are elements (5) for containing and subdividing said articles (6) into a plurality of stacks, each stack containing articles belonging to a same dimensional class, and in which said extracting means are adjustable in relation to each said dimensional class of said articles.

3. The singler of claim 2, wherein a programmable control unit (13) is provided for realizing said adjusting of said extracting means (8).

4. The singler of claim 2, wherein said sideways extracting means comprise:
- an endless flexible transmission element (9) arranged at said interceptive barrier and defining the latter, said flexible transmission element (9) being actuable in the presence of one said article (6) so as to drag this article (6) towards said receive and take-away apparatus (16), and
- at least one movable element (10) designed to define a passageport (12) which is disposed near said flexible transmission element (9) and ajustable in relation to each dimensional class of said articles.

5. The singler of claim 4, wherein said flexible transmission element (9) has a ledge designed to interfere with one said article.

6. The singler of claim 4, wherein a sensor (15) is provided for actuating said flexible transmission element (9) in the presence of one said article (6) positioned against the same flexible transmission element (9).

7. The singler of claim 2, wherein said interceptive barrier (7) extends in a cantilever fashion over said feeding conveyor (2) and wherein said contain and subdivide elements (5) include substantially c-shaped bulkheads extending in a direction transverse to said conveyor (2) so as to not interfere with said interceptive barrier (7).

8. The singler of claim 1, wherein said receive and take-away apparatus (16) copmprises a sorting conveyor (17) and a turning over guide (18) operating on single articles extracted from the feeding conveyor (2) for overturning them in abutment on the sorting conveyor (16) with their one largest face.

## Patentansprüche

1. Vereinzelungsvorrichtung zum Fördern und Teilen von gestapelt gruppierten Gegenständen, umfassend:
- ein Förderband (2), auf dem die gestapelt gruppierten Gegenstände Seite an Seite zueinander benachbart verfügbar sind;
- mindestens eine Sperre (7) zum Abfangen der Gegenstände, die auf dem Förderband und in einer Richtung quer zum Förderband angeordnet ist;
- Mittel (8) zum seitwärtigen Abziehen jedes einzelnen Gegenstands von dem Band, der nacheinander durch die Sperre abgefangen wird,
**dadurch gekennzeichnet**, **daß**
- die Abzugsmittel (8) ein bewegbares Element (10) umfassen, um eine Passageöffnung (12) zu definieren,
- wobei die Sperre (7) Mittel (14) zum Schieben einzelner Gegenstände aufweist; und
- die Vereinzelungsvorrichtung weiterhin Mittel (16) einschließt, die konstruiert sind, um jeden einzelnen Gegenstand, der von dem Förderband mit dem Abzugsmittel abgezogen wird, aufzunehmen und fortzutragen, einschließlich einer Wendeführung (18), die auf einzelne Gegenstände einwirkt, die von dem Förderband abgezogen werden.

2. Vereinzelungsvorrichtung nach Anspruch 1, wobei Elemente (5) zum Einschließen und Unterteilen der Gegenstände (6) in eine Mehrzahl von Stapeln mit dem Förderband (2) im Eingriff stehen, und jeder Stapel Gegenstände enthält, die zur gleichen Größenklasse gehören und an welche die Abzugsmittel in Bezug auf jede der Größenklassen der Gegenstände anpaßbar sind.

3. Vereinzelungsvorrichtung nach Anspruch 2, wobei eine programmierbare Steuerungseinheit (13) bereitgestellt wird, um die Anpassung der Abzugsmlttel (8) durchzuführen.

4. Vereinzelungsvorrichtung nach Anspruch 2, wobei die seitwärtigen Abzugsmittel umfassen:
- ein flexibles Endlosübertragungselement (9), das an der Zwischensperre angeordnet ist und die leztere definiert, wobei das flexible Übertragungselement (9) in Anwesenheit eines der Gegenstände (6) betriebsfahig ist, um so diesen Gegenstand (6) zu der Aufnahme- und Wegnahmevorrichtung (16) abzuziehen und
- mindestens ein bewegbares Element (10), das zum Definieren einer Passageöffnung (12) konstruiert ist, die in der Nähe des flexiblen Übertragungselements (9) angeordnet und in bezug auf jede Größenklasse der Gegenstände anpaßbar ist.

5. Vereinzelungsvorrichtung nach Anspruch 4, wobei das flexible Übertragungselement (9) eine Rippe aufweist, die zum Einwirken auf einen einzelnen Gegenstand konstruiert ist.

6. Vereinzelungsvorrichtung nach Anspruch 4, wobei ein Sensor (15) zum Betätigen der flexiblen Übertragungselements (9) bei Anwesenheit von einem der Gegenstände (6), die auf dem gleichen flexiblen Übertragungselement (9) positioniert werden, bereitgestellt wird.

7. Vereinzelungsvorrichtung nach Anspruch 2, wobei die abfangende Sperre (7) sich auslagerartig über dar Förderband (2) erstreckt und wobei die eingeschlossenen und unterteilten Elemente (5) im wesentlechen C-förmige Trennwände enthalten, die eich in einer Richtung quer zu dem Band (2) erstrecken, so daß sie die abfangende Sperre (7) nicht stören.

8. Vereinzelungsvorrichtung nach Anspruch 1, wobei die Aufnahme- und Wegnahmevorrichtung (16) ein Sortierband (17) und eine Wendeführung (18) umfaßt, die einen einzelnen von dem Förderband (2) abgezogenen Gegenstand zum Wenden in eine Ablage mit seiner größten Fläche auf dem Sortierband, (16) bringt.

## Revendications

1. Un séparateur pour faire avancer et séparer des objets groupés en piles, comprenant :
- un convoyeur d'alimentation (2) sur lequel les piles d'objets sont disposées les unes à côté des autres, flanc contre flanc,
- au moins une barrière (7) pour intercepter lesdits objets, placée perpendiculairement au-dessus dudit convoyeur d'alimentation,
- des moyens (8) pour extraire par le côté du convoyeur les objets interceptés par la barrière les uns après les autres,
**caractérisé en ce que**
- lesdits moyens d'extraction (7) comprennent un élément mobile (10) définissant une ouverture de passage (12),
- ladite barrière (7) est pourvue de moyens (14) pour pousser les objets individuels ; et
- le séparateur est pourvu de moyens (16) pour recevoir et évacuer de ces moyens d'extraction les objets individuels extraits du convoyeur d'alimentation, et est pourvu en plus d'un guide de renversement (18) agissant sur les objets individuels extraits du convoyeur d'alimentation.

2. Le séparateur selon la revendication 1, possédant en association avec ledit convoyeur d'alimentation, des éléments (5) de stockage et de subdivision desdits objets (6) en une pluralité de piles, chaque pile contenant des objets appartenant à une même classe dimensionnelle, et dans laquelle lesdits moyens d'extraction sont réglables en fonction de la classe dimensionnelle desdits objets.

3. Le séparateur selon la revendication 2, dans lequel une unité de commande programmable (13) est fournie pour réaliser ledit réglage dudit dispositif d'extraction (8).

4. Le séparateur selon la revendication 2, dans lequel ledit moyen de retrait latéral comprend :
un élément flexible de transmission sang fin (9) placé a ladite barrière d'interception et modifiant cette dernière, dit élément flexible de transmission (9) fonctionnant en présence d'un desdits objets (6) de manière à tirer cet objet (6) vers ledit l'appareil de réception et d'évacuation (16), et
au moins un élément mobile (10) définissant une ouverture de passage (12) placé près de l'élément flexible de transmission (9) et réglable en fonction de la classe dimensionnelle desdits objets.

5. Le séparateur selon la revendication 4, dans lequel l'élément flexible de transmission (9) est pourvu d'une saillie prévue pour interférer avec un desdits objets,.

6. Le séparateur selon la revendication 4, dans lequel un capteur (15) est fourni pour actionner ledit élément flexible de transmission (9) lorsque l'un desdits objets (6) se présente à l'élément flexible de transmission (9).

7. Le séparateur selon la revendication 2, dans lequel ladite barrière d'interception (7) s'étend en porte-à-faux sur ledit convoyeur d'alimentation (2) et dans lequel lesdits éléments de stockage et de subdivision (5) incluent un bon nombre de cloisons en forme de C s'étendant dans une direction transversale audit convoyeur (2) de sorte à ne pas interférer avec ladite barrière d'interception (7).

8. Le séparateur selon la revendication 1, dans lequel ledit appareil de réception et d'évacuation (16) comprend un convoyeur de triage (17) et un guide de renversement (18) agissant sur les objets individuels extraits du convoyeur d'alimentation (2) pour les renverser contre le convoyeur de triage (16) sur leur plus grand côté.
